# EUROPÄISCHE PATENTSCHRIFT

(11) **EP 0 971 848 B1**
(45) Veröffentlichungstag und Bekanntmachung des Hinweises auf die Patenterteilung: **08.10.2003**
(21) Anmeldenummer: 98918969.1
(22) Anmeldetag: 14.05.1998
(51) Int. Cl.: B65D 81/03, B65D 81/05

(54) **VERPACKUNG UND VERFAHREN ZUM HERSTELLEN DERSELBEN**
PACKAGING AND METHOD FOR PRODUCING THE SAME
EMBALLAGE ET PROCEDE PERMETTANT DE LE PRODUIRE

(30) Priorität: 14.05.1997 AT 82697
(43) Veröffentlichungstag der Anmeldung: 19.01.2000
(73) Patentinhaber: mechatronic Systemtechnik GmbH, 9500 Villach (AT)
(72) Erfinder: OSWALD, Wolfgang, A-9241 Wernberg (AT)
(74) Vertreter: Beer, Manfred, Dipl.-Ing.
(86) Internationale Anmeldenummer: AT9800128
(87) Internationale Veröffentlichungsnummer: WO98051585

(56) Entgegenhaltungen:
- FR-A- 2 121 977
- GB-A- 776 893
- US-A- 2 344 369
- US-A- 3 346 101
- US-A- 5 272 856

## Beschreibung

Die Erfindung betrifft eine Verpackung mit den Merkmalen des einleitenden Teils des unabhängigen Patentanspruches 1.

Die Erfindung betrifft weiters ein Verfahren zum Herstellen einer solchen Verpackung mit den Merkmalen des einleitenden Teils von Patentanspruch 6.

Die US-A-5 272 856 offenbart eine Verpackung für Gegenstände, umfassend einen aufblasbaren Hohlkörper, der ein doppelwandiges, schlauchförmiges Gebilde ist, wobei das doppelwandige, schlauchförmige Gebilde an seinen beiden Enden offen ist, und bei der die die Innenlage und die die Außenlage bildende Folie längs einer in Richtung der Längserstreckung des schlauchförmigen Gebildes, verlaufenden Naht miteinander verbunden sind.

Die GB 776 893 A offenbart ein Verfahren zum Herstellen einer Verpackung für Gegenstände mit einem Hohlkörper. Bei diesem Verfahren wird der Hohlkörper aus einer Flachfolie durch zweimaliges Zusammenlegen nach verschiedenen Richtungen und luftdichtes Verbinden an seinen Rändern hergestellt.

Der Erfindung liegt die Aufgabe zu Grunde, eine einfach herstellbare und einfach handhabbare Verpackung zur Verfügung zu stellen.

Was die Verpackung betrifft, wird die Aufgabe bei einer Verpackung für Gegenstände umfassend einen aufblasbaren Hohlkörper, der ein doppelwandiges, schlauchförmiges Gebilde ist, durch die Merkmale des Anspruches 1 gelöst.

Was das Verfahren anlangt, wird dies gemäß der Erfindung durch die Merkmale des Verfahrensanspruches 6 erreicht.

Mit der Erfindung wird eine Verpackung vorgeschlagen, in welcher der zu verpackende Gegenstand dadurch gehalten wird, daß die Verpackung einen aufblasbaren Hohlkörper aufweist, dessen Innenwand sich beim Aufblasen an den zu verpackenden, in die Verpackung eingesetzten Gegenstand anlegt, so daß der Gegenstand fixiert und von einer federnden Schutzzone umgeben ist. Die Verpackung gemäß der Erfindung erfordert einen geringen Materialaufwand. Sie ist ökonomisch und ökologisch rationell einsetzbar und belastet durch Wiederverwendung oder einfaches Recycling die Umwelt nicht nachhaltig.

Die Dichtheit und Widerstandsfähigkeit der bei der erfindungsgemäßen Verpackung vorgesehenen Hohlkörper wird in Abhängigkeit von den eingesetzten Materialien gewählt und den Erfordernissen angepaßt. Es sind Materialien verfügbar, die durch ihre spezifischen Eigenschaften nach ihrer Verwendung energiesparend in Granulat rückgeführt werden können, das dann wiederum den Ausgangswerkstoff (Flachfolie oder Schlauch) für die erfindungsgemäße Verpackung darstellen kann. In den seltensten Fällen ist eine jahrelange Lagerbarkeit erforderlich oder gibt es extreme Temperaturschwankungen, deren Umstand eine hohe Anforderung an das Material und die verarbeitende Technik stellen könnte.

Der erfindungsgemäß zu Verpackungszwecken eingesetzte Hohlkörper wird vorzugsweise durch entsprechendes Zusammenlegen (Falttechnik) einer Folie und dichte Verbindung der Ränder derselben erzeugt (vorhandene Schlauchfolien können ebenfalls herangezogen werden). Dabei wird ein an beiden Enden offener Hohlzylinder gebildet. Üblicherweise besteht dieser Hohlkörper aus, vorzugsweise thermoplastischem, Kunststoff, so daß die Schnittkanten miteinander verschweißbar - sonst verklebbar - sind, wozu sie vorzugsweise überlappt werden.

Die Wahl der Falttechnik und die Abmessungen des verwendeten Zuschnittes der Flachfolie sind ausschlaggebend für die Größe des hergestellten Hohlkörpers. Die Basis für die Berechnung der Schutzzone stellen die Abmessungen des zu verpackenden und zu schützenden Gegenstandes dar.

Wahlweise läßt sich der Hohlkörper der erfindungsgemäßen Verpackung aus einem Abschnitt eines Endlosschlauchs bilden, dessen Ränder dicht miteinander verbunden sind. Wenn der Endlosschlauch aus thermoplastischem Kunststoff besteht, können die Schnittkanten miteinander verschweißt werden - sonst werden sie verklebt -, wozu sie vorzugsweise einander überlappt werden.

Auch andere Taschen- oder beutelartige Hohlkörper sind sehr einfach herstellbar wobei mindestens eine Einbringöffnung für den zu verpakkenden Gegenstand vorhanden sein muß; bei der Herstellungsweise aus einem Endlosschlauch sind beide Enden offen.

Der Hohlkörper kann alleine die Verpackung bilden oder in eine, insbesondere zylindrische oder prismatische, Schutzhülle lose eingesetzt werden. Der aufgeblasene Hohlkörper mit eingesetztem Gegenstand weist dann eine definierte, geometrische Außenform auf, so daß Stapelbarkeit gegeben und auch das Einsetzen oder Einschlichten mehrerer Hohlkörper in eine geometrisch definierte Schutzhülle (z.B. Überkarton) ohne weiteres möglich ist.

Auch für empfindliche Kleinteile bietet sich die erfindungsgemäße Verpackung als vorteilhafte Lösung an. Die so verpackten Teile können als Schüttgut in einer Schutzhülle, z. B. einem Sack oder Karton, transportiert werden.

Das Abdichten der Hohlkörper nach dem Einsetzen des zu verpackenden Gegenstandes und Aufblasen der Hohlkörper erfolgt bei kleinen Einheiten beispielswweise durch Verkleben oder - bei Thermoplasten - auch durch Schweißen. Für größere Einheiten, insbesondere solche, die nicht als Einwegverpackung gedacht sind, können (bekannte) Ventile vorgesehen sein.

Hohlkörper, die selbst die Verpackung bilden, also keine Schutzhülle tragen, bestehen bevorzugt aus einem elastischen bzw. elastoplastischem Material mit wiederverwertbaren, mechanisch stark belastbaren Eigenschaften, das die Außenhautfolie bildet, und einer entsprechenden flexibleren, meist dünnwandigen Innenhautfolie, die miteinander durch entsprechendes Übereinanderlegen in der vorher beschriebener Weise miteinander verbunden werden. Das Aufblasen erfolgt hier vorzugsweise über die Innenhautfolie, wobei diese wiederum vorzugsweise aus elastischem bzw. elastoplastischem Material, insbesondere einer Kunststoffolie besteht. Durch entsprechende Falt- und Schweißtechniken können mit der steifen Außenhautfolie geometrische Formen (z.B. Prisma) gebildet werden, die wiederum eine leichtere Stapelbarkeit der so verpackten Einheiten ermöglichen. Die verwendeten Materialien sind so zu wählen, daß sie als Einheit einer Rückgewinnung zugeführt werden können.

Im folgenden wird die Erfindung an Hand von Ausführungsbeispielen von Verpackungen unter Bezugnahme auf die Zeichnungen näher erläutert. Es zeigt:
Fig. 1a und b zwei Schritte beim Herstellen einer Verpackung,
Fig. 2 die gemäß Fig. 1a und b erhaltene Verpackung mit einem in ihr verpacktem Trinkglas,
Fig. 3a und b eine Ausführungsform der Verpackung mit verstärkter Außenhaut und
Fig. 4 eine in eine Hülle eingeschobene Verpackung.

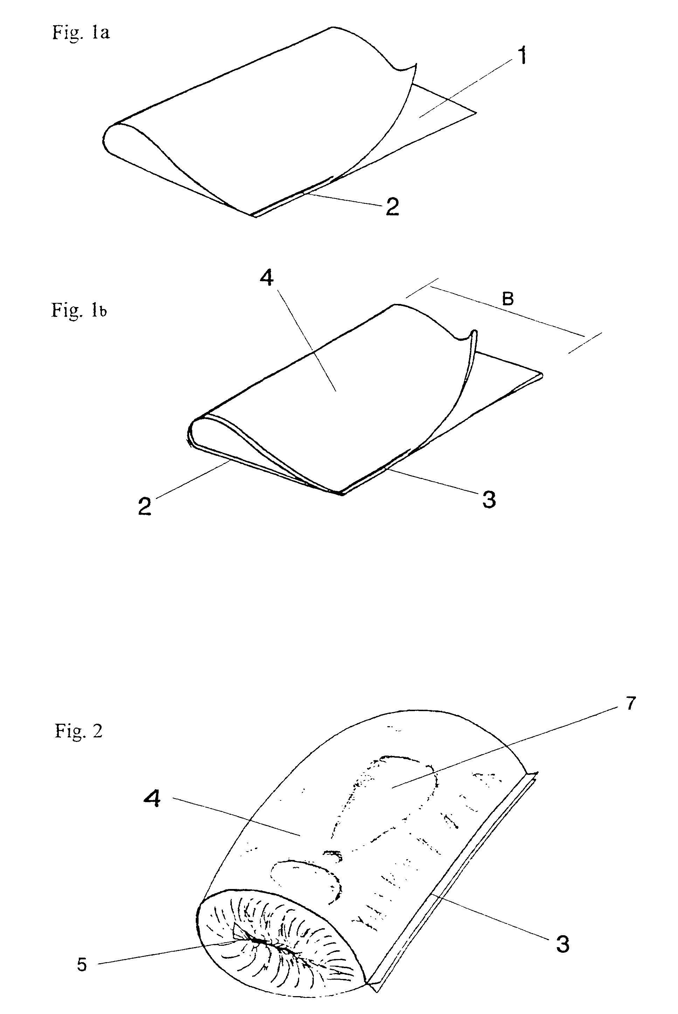

In Fig. 1a ist gezeigt, wie eine flache Folie 1 gefaltet und auf der der Falte gegenüberliegenden Seite an ihren Rändern 2 dicht verbunden (z.B. kleben od. schweißen) wird. Der so hergestellte Schlauchabschnitt wird, wie in Fig. 1b gezeigt, noch einmal gefaltet, an den noch offenen Rändern 3 in derselben Verfahrenstechnik ebenfalls dicht verbunden und bildet dann einen nach beiden Enden hin offenen Hohlkörper 4 in Form eines schlauchförmigen Gebildes.

In diesen an seinen Enden offenen Hohlkörper 4 wird der zu verpakkende Gegenstand eingeschoben und dann zwischen die Lagen des Hohlkörpers 4 Luft eingebracht. Dabei entfernen sich die Lagen voneinander und der Hohlkörper wird entsprechend der ursprünglichen Schlauchbreite B kürzer und nimmt dafür eine etwa zylindrische Form an (Fig. 2).

Die offenen Enden des Hohlkörpers 4 werden dadurch in Richtung auf den zentralen Durchtritt 5 hineingezogen und die Innenwand umwölbt den verpackten Gegenstand 7, wie aus Fig. 2 an Hand von dessen Kontur zu erkennen ist, so daß der Gegenstand 7 - der als Trinkglas dargestellt ist - im Hohlkörper 4 unverschieblich fixiert und allseits von einem schützenden Luftpolster umgeben ist.

Nach dem Aufblasen wird die Lufteinblaseöffnung dicht verschlossen, z.B. verklebt. Beim Anstechen des Hohlkörpers 4 zur Entnahme des verpackten Gegenstandes entweicht die Luft, die Verpackung fällt zusammen und der Gegenstand 7 kann entnommen werden.

Die erforderlichen Abmessungen der Flachfolie 1 werden aus den Abmessungen des Verpackungsgutes, sowie des gewünschten oder erforderten Schutzpolsters ermittelt. (Höhe und Umfang der Verpakkung plus Luftpolstervolumen stehen im direkten Verhältnis zur Länge und Breite der Planfolie).

Fig. 2 zeigt den wie in Fig. 1a und b gezeigt hergestellten Hohlkörper 4 als Schutzmantel für ein Verpackungsgut (z.B. Trinkglas 7) in aufgeblasenem Zustand. Der Aufblasedruck richtet sich nach dem Gewicht des zu verpackenden Gegenstandes und dem verwendeten Folienmaterial, ist aber üblicherweise gering, so daß die Handhabung der Verpackung völlig problemlos ist. Die erfindungsgemäße Verpakkung ergibt unter anderem eine ausgezeichnete schlaggedämpfte Halterung der verpackten Gegenstände.

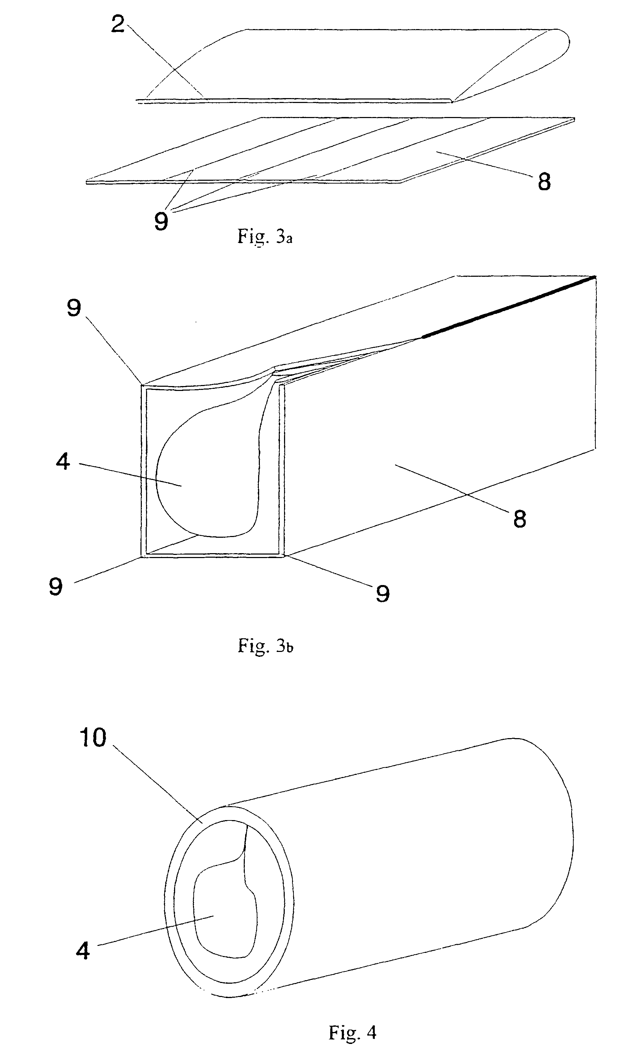

Fig. 3a und b zeigen eine Ausführungsform einer Verpackung, die selbst die Schutzhülle bildet, dabei wird eine mechanisch stark belastbares Material als Außenhülle 8 derart verwendet, daß es mit dem nach Stufe gemäß Fig. 1a erhaltenem vorgefertigten Schiauchabschnitt gemeinsam an den noch offenen Rändern 3 dicht verbunden (verklebt oder verschweißt) wird. Durch entsprechende Schweißnähte oder Einschnitte 9 als Materialvorbehandlung an der Außenhülle 8 ist es möglich, die endgültige geometrische Form der Verpackung (z.B. in Fig. 3b als Prisma dargestellt) beliebig und nach Bedarf vorzugeben.

Das in Fig. 4 dargestellte Ausführungsbeispiel hat eine Schutzhülle 10 in Form eines (starren) Rohres, in das der gemäß Fig. 1a und b hergestetllte Hohlkörper 4 mit seinem Verpackungsgut lose eingeführt wurde, um dann mit Luft gefüllt die das Verpackungsgut umgebende Schutzhülle (siehe Fig. 2) zu bilden und dennoch nach außen, durch die Schutzhülle 10 bedingt, mechanischen Einwirkungen wirkungsvoll begegnen zu können. Die Schutzhülle 10 kann durch Deckel (nicht gezeigt) verschlossen werden. In dieser Variante ist jegliche, mit dem entsprechend geformten Hohlkörper 4 harmonisierende, geometrische Form als Schutzhülle 10 denkbar.

Selbstverständlich kann der aufblasbare Hohlkörper 4 auch durch Verkleben, z.B. einer Doppelfolie, gebildet werden und ist nicht auf die Aufnahme von nur jeweils einem Gegenstand beschränkt; es können jeweils mehrere, auch ungleich geformte Gegenstände gleichzeitig in diesem Hohlkörper gehalten sein.

Die erfindungsgemäße Verpackung kann nicht nur als Transportverpackung eingesetzt werden, sondern auch zum temporären Umkleiden von ortsfesten Gegenständen, um diese zu schützen bzw. abzupolstern, so daß eine Verletzungsgefahr an diesen Gegenständen , z.B. an deren vorstehenden Ecken oder Kanten vermieden oder herabgesetzt ist.

Die Verpackung kann weiterhin in üblicher Weise gefärbt und/oder bedruckt werden.

Zusammenfassend kann ein bevorzugtes Ausführungsbeispiel der erfindungsgemäßen Verpackung und des Verfahrens zum Herstetllen derselben wie folgt beschrieben werden:
Es wird eine flexible Verpackung für Gegenstände vorgeschlagen, die einen aufblasbaren Hohlkörper (4) in Form eines doppelwandigen, schlauchförmigen Gebildes, in dem der zu verpackende Gegenstand (7) nach dem Aufblasen des Hohlkörpers (4) fixiert ist. Der Hohlkörper (4) kann durch Falt- und Verbundtechniken in die gewünschte Form gebracht werden und ermöglicht dadurch nicht nur eine Transportverpackung für geometrisch einfach, oder komplex geformte Gegenstände, sondern eine ebenso flexible und wirkungsvolle Schutzverkleidung einzelner, verletzungsgefährdeter, z.B. ortsfester Gegenstände. Die Verpackung zeichnet sich durch problemloses Handhabung, platzsparende Lagerung vor und nach der Verwendung, Leichtigkeit und durch die Vermeidung von Verbundstoffbildung durch problemlose Wiederverwertbarkeit aus.

## Patentansprüche

1. Verpackung für Gegenstände, umfassend einen aufblasbaren Hohlkörper (4), der ein doppelwandiges, schlauchförmiges Gebilde ist, das an seinen beiden Enden offen ist, wobei die die Innenlage und die die Außenlage bildende Folie (1) längs einer in Richtung der Längserstreckung des schlauchförmigen Gebildes, d. h. von einer endständigen Öffnung zur andern endständigen Öffnung, verlaufenden Naht miteinander verbunden sind, **dadurch gekennzeichnet, daß** die die Außenlage bildende Folie (1) mit der die Innenlage bildenden Folie an einem offenen Ende des Hohlkörpers (4) einstückig ausgebildet ist, und daß die die Innenlage bildende Folie durch eine die endständige Öffnung umgebende Naht mit der die Außenlage bildenden Folie am anderen Ende verbunden ist.

2. Verpackung nach Anspruch 1, **dadurch gekennzeichnet, daß** der Hohlkörper (4) im Bereich seiner parallel zu seiner Längserstreckung verlaufenden Naht mit einer das schlauchförmige Gebilde außen umgebenden Schutzhülle (8) verbunden ist.

3. Verpackung nach Anspruche 1 oder 2, **dadurch gekennzeichnet, daß** der Hohlkörper (4) wenigstens eine Öffnung zum Einführen von unter Druck stehendem Gas, insbesondere Luft aufweist.

4. Verpackung nach einem der Ansprüche 1 bis 3, **dadurch gekennzeichnet, daß** der Hohlkörper (4) für sich selbst die Verpakkung ist, oder innerhalb einer Schutzhülle (8, 10) angeordnet ist.

5. Verpackung nach einem der Ansprüche 1 bis 4, **dadurch gekennzeichnet, daß** die äußere Wand des Hohlkörpers (4) mit einer Verstärkung (8), die ggf. die Außenform des Hohlkörpers bestimmt, verbunden ist.

6. Verfahren zum Herstellen der Verpackung nach Anspruch 1, bei dem der Hohlkörper (4) aus einer Flachfolie (1) durch zweimaliges Zusammenlegen, bzw. Falten, nach verschiedenen Richtungen und luftdichtes Verbinden an seinen Rändern (2 und 3) hergestellt wird, **dadurch gekennzeichnet, daß** die Flachfolie (1) ein erstes Mal auf sich selbst umgefaltet wird, daß die nach der ersten Faltung aufeinanderliegenden Ränder (2) der Folie (1) miteinander verbunden werden, daß die so erhaltene, gefaltete Folie (1) ein zweites Mal auf sich selbst, senkrecht zur ersten Faltung gefaltet wird und daß die nach der zweiten Faltung aufeinanderliegenden Ränder (3) der Folie (1) miteinander verbunden werden.

7. Verfahren nach Anspruch 6, **dadurch gekennzeichnet, daß** beim Verbinden der nach der zweiten Faltung aufeinanderliegenden Ränder (3), diese miteinander und mit einer um das schlauchförmige Gebilde herumgelegten Schutzhülle (8) verbunden werden..

## Claims

1. Packaging for articles comprising an inflatable hollow body (4) which is a double-walled, tubular formed body, that is open at both its ends, whereby the film (1) which forms the inner layer and the outer layer are joined to one another along a seam which runs in the direction of the longitudinal extension of the tubular formed body, i.e. from one terminal opening to the other terminal opening, **characterized in that** the film (1) forming the outer layer is made integral with the film forming the inner layer at one open end of the hollow body (4), and that the film which forms the inner layer is joined to the film which forms the outer layer by a seam which surrounds the other terminal opening.

2. Packaging according to claim 1, **characterized in that** the hollow body (4) is joined to a protective shell (8) which surrounds the tubular formed body on the outside in the region of its seam running parallel to its longitudinal extension.

3. Packaging according to claims 1 or 2, **characterized in that** the hollow body (4) comprises at least one opening for introduction of pressurized gas, especially air.

4. Packaging according to one of claims 1 to 3, **characterized in that** the hollow body (4) in itself is the packaging, or is located within a protective shell (8, 10).

5. Packaging according to one of claims 1 to 4, **characterized in that** the outside wall of the hollow body (4) is joined to a reinforcement (8) which optionally determines the outer shape of the hollow body.

6. Process for producing the packaging of claim 1 in which the hollow body (4) is produced from a flat film (1) by double folding up and folding respectively in different directions and airtight sealing at its edges (2 and 3), **characterized in that** the flat film (1) is first folded over onto itself, that the edges (2) of the film (1) which lie on top of one another after the first folding are joined to one another, that the folded film (1) thus obtained is folded a second time onto itself perpendicular to the first fold, and that the edges (3) of the film (1) which lie on top of one another after the second folding are joined to one another.

7. Process according to claim 6, **characterized in that** when the edges (3) which lie on top of one another after the second folding are joined, they are joined to one another and to a protective shell (8) placed around the tubular formed body.

## Revendications

1. Emballage pour des objets, comprenant un corps creux (4) gonflable, qui se présente sous la forme d'une structure tubulaire à double paroi, ouverte à ses deux extrémités, la feuille (1) qui constitue la couche intérieure et la feuille (1) qui constitue la couche extérieure étant liées l'une à l'autre le long d'une soudure qui s'étend dans la direction longitudinale de la structure tubulaire, c'est-à-dire depuis une ouverture terminale jusqu'à l'autre ouverture terminale, **caractérisé en ce que** la feuille (1) constituant la couche extérieure est formée d'une pièce avec la feuille (1) constituant la couche intérieure à une extrémité ouverte du corps creux (4) et **en ce que** la feuille (1) constituant la couche intérieure, à l'autre extrémité, est liée à la feuille (1) constituant la couche extérieure par une soudure qui entoure l'extrémité ouverte.

2. Emballage selon la revendication 1, **caractérisé en ce que** le corps creux (4), dans la région de sa soudure parallèle à sa direction longitudinale, est lié à une enveloppe de protection (8) qui entoure extérieurement la structure tubulaire.

3. Emballage selon la revendication 1 ou 2, **caractérisé en ce que** le corps creux (4) présente au moins une ouverture pour l'introduction de gaz sous pression, en particulier d'air.

4. Emballage selon une des revendications 1 à 3, **caractérisé en ce que** le corps creux (4) constitue en lui-même l'emballage, ou est disposé à l'intérieur d'une enveloppe de protection (8, 10).

5. Emballage selon une des revendications 1 à 4, **caractérisé en ce que** la paroi extérieure du corps creux (4) est liée à un moyen de renfort (8) qui, le cas échéant, détermine la forme extérieure du corps creux.

6. Procédé de fabrication de l'emballage selon la revendication 1, dans lequel le corps creux (4) est fabriqué à partir d'une feuille (1) plane par double rabattement ou pliage dans des directions différentes et liaison étanche à l'air au niveau des bords (2 et 3), **caractérisé en ce qu'**on plie la feuille (1) plane une première fois sur elle-même, **en ce qu'**on lie l'un à l'autre les bords (2) de la feuille (1) reposant l'un sur l'autre après le premier pliage, **en ce qu'**on plie la feuille (1) pliée ainsi obtenue, une seconde fois sur elle-même, et **en ce qu'**on lie l'un à l'autre les bords (3) de la feuille (1) reposant l'un sur l'autre après le second pliage.

7. Procédé selon la revendication 6, **caractérisé en ce que** lors de la liaison des bords (3) reposant l'un sur l'autre après le second pliage, on lie ceux-ci entre eux et à une enveloppe de protection (8) disposée autour de la structure tubulaire.
